# EUROPÄISCHE PATENTANMELDUNG

(11) **EP 3 473 793 A1**
(43) Veröffentlichungstag der Anmeldung: **24.04.2019**
(21) Anmeldenummer: 18199999.6
(22) Anmeldetag: 12.10.2018
(51) Int. Cl.: E05F 15/635, F16H 19/04

(54) **ANTRIEBSVORRICHTUNG**

(30) Priorität: 23.10.2017 DE 102017218845
(71) Anmelder: SUSPA GmbH, 90518 Altdorf (DE)
(72) Erfinder: Hollerbaum, Bernd, 95473 Creußen (DE); Bielesch, Harald, 91220 Schnaittach (DE)
(74) Vertreter: Rau, Schneck & Hübner Patentanwälte Rechtsanwälte PartGmbB

(57) **Zusammenfassung**

Eine Antriebsvorrichtung für eine Linearverlagerung entlang einer Verlagerungsrichtung umfasst ein Antriebselement (5), ein an das Antriebselement (5) gekoppeltes Kraftübertragungselement (14), mindestens an dem Kraftübertragungselement (14) eingreifendes Linearverlagerungselement (15), ein Gegenlager (12) zum Lagern des Linearverlagerungselement (15) an dem Kraftübertragungselement (14), wobei das Gegenlager (12) bezüglich einer Gegenlagerdrehachse (13) drehbar gelagert ist.

## Beschreibung

Die vorliegende Patentanmeldung nimmt die Priorität der deutschen Patentanmeldung DE 10 2017 218 845.6 in Anspruch, deren Inhalt durch Bezugnahme hierin aufgenommen wird.

Die Erfindung betrifft eine Antriebsvorrichtung für eine Linearverlagerung entlang einer Lagerungsrichtung.

Antriebsvorrichtungen für Linearverlagerungen werden beispielsweise für Sonnen- und Schiebedächer im Automobilbereich eingesetzt.

Es ist die Aufgabe der vorliegenden Erfindung, eine Antriebsvorrichtung bereitzustellen, mit der eine Linearverlagerung verbessert ist und insbesondere mit reduzierter Gegenkraft und/oder verschleißarm möglich ist.

Diese Aufgabe ist erfindungsgemäß gelöst durch eine Antriebsvorrichtung mit den im Anspruch 1 angegebenen Merkmalen.

Erfindungsgemäß wurde erkannt, dass ein Linearverlagerungselement mittels eines Gegenlagers an einem Kraftübertragungselement vorteilhaft gelagert ist. Dadurch, dass das Gegenlager bezüglich einer Gegenlagerdrehachse drehbar gelagert ist, findet zwischen dem Gegenlager und dem Linearverlagerungselement eine Abrollbewegung statt. Insbesondere gegenüber einer reibenden Gleitbewegung ist der Verschleiß an dem Linearverlagerungselement und insbesondere an dem Gegenlager reduziert. Der Wirkungsgrad der Antriebsvorrichtung ist verbessert. Die Lebensdauer der Antriebsvorrichtung ist erhöht. Die Geräuschentwicklung der Antriebsvorrichtung ist vermindert. Die erfindungsgemäße Antriebsvorrichtung kann vorteilhaft in Sonnen- und Schiebedächern im Automobil eingesetzt werden. Die Antriebsvorrichtung kann auch zum Betätigen eines Sonnenrollos und/oder von Dachfenstern in Wohnmobilen und/oder Wohn-Anhängern dienen. Die Antriebsvorrichtung kann auch zum Verlagern eines Luftleitsystems, insbesondere in Form eines verstellbaren Spoilers, eingesetzt werden. Die erfindungsgemäße Antriebsvorrichtung ermöglicht eine Linearverlagerung entlang einer Verlagerungsrichtung. Ausgehend von einem Antriebselement, das eine Antriebsbewegung, insbesondere eine Antriebsdrehbewegung, zur Verfügung stellt, kann die Antriebsdrehbewegung über ein mit dem Antriebselement gekoppeltes Kraftübertragungselement auf mindestens ein Linearverlagerungselement übertragen werden. Das mindestens eine Linearverlagerungselement greift an dem Kraftübertragungselement ein. Das Antriebselement ist insbesondere ein Motor, insbesondere ein Elektromotor. An dem Elektromotor kann ein Getriebe angeschlossen sein, um die Antriebsdrehzahl und/oder das Antriebsdrehmoment des Elektromotors bedarfsgerecht anzupassen.

Eine Antriebsvorrichtung gemäß Anspruch 2 ist mechanisch robust und kompakt ausgeführt. Das Kraftübertragungselement ist insbesondere als außen verzahntes Stirnrad ausgeführt. Das Kraftübertragungselement ist bezüglich einer Antriebsdrehachse drehfest mit dem Antriebselement verbunden.

Eine Antriebsvorrichtung gemäß Anspruch 3 ist mechanisch besonders robust ausgeführt. Das Gegenlager ist insbesondere mit einer Schrägverzahnung ausgeführt. Eine unbeabsichtigte Verlagerung und/oder Verschiebung des Gegenlagers gegenüber dem Antriebselement ist ausgeschlossen. Das Antriebselement, das Kraftübertragungselement und das Linearverlagerungselement sind in einer definierten Anordnung zueinander an der Antriebsvorrichtung festgelegt.

Alternativ können die Antriebsdrehachse und die Gegenlagerdrehachse schräg zueinander orientiert sein, um insbesondere das Gegenlager geradverzahnt ausführen zu können.

Eine Antriebsvorrichtung gemäß Anspruch 4 ermöglicht eine besonders effiziente Kraftübertragung für die Linearverlagerung.

Eine Antriebsvorrichtung gemäß Anspruch 5 gewährleistet eine unmittelbare Kraftübertragung von dem Kraftübertragungselement auf das Linearverlagerungselement. Die Kraftübertragung erfolgt über mindestens ein Eingriffsmittel des Kraftübertragungselements, insbesondere in Form der Außenverzahnung des Stirnrads, mit dem mindestens einen Gegeneingriffsmittel des Linearverlagerungselements, insbesondere einem Steigungssteg. Die Rollbewegung zwischen dem Kraftübertragungselement und dem Linearverlagerungselement ist dadurch begünstigt.

Eine Antriebsvorrichtung gemäß Anspruch 6 vereinfacht die vorteilhafte Rollbewegung zwischen dem Gegenlager und dem Linearverlagerungselement.

Alternativ kann die Gegenrolle des Gegenlagers auch ohne Verzahnung, insbesondere glatt, ausgeführt sein. Die Herstellung der Gegenrolle ist dadurch vereinfacht.

Eine Antriebsvorrichtung gemäß Anspruch 7 gewährleistet eine kompakte und mechanisch robuste Ausführung. Dadurch, dass das Kraftübertragungselement und das Gegenlager jeweils an ein und derselben Grundplatte befestigt sind, ist eine unbeabsichtigte Relativverlagerung des Kraftübertragungselements gegenüber dem Gegenlager ausgeschlossen. Insbesondere sind die Antriebsdrehachse und die Gegenlagerdrehachse grundplattenfest angeordnet.

Ein Gehäuse gemäß Anspruch 8 ermöglicht eine sicherheitsrelevante und optisch vorteilhafte Abdeckung der Grundplatte mit den daran befestigten Funktionskomponenten. Insbesondere sind das Kraftübertragungselement und das mindestens eine Gegenlager innerhalb des Gehäuses angeordnet. Das mindestens eine Linearverlagerungselement ist durch das Gehäuse hindurch geführt. Insbesondere tritt das mindestens eine Linearverlagerungselement durch eine erste Öffnung in das Gehäuse ein und durch eine zweite Öffnung, die beabstandet von der ersten Öffnung angeordnet ist, aus dem Gehäuse heraus. Innerhalb des Gehäuses ist das mindestens eine Linearverlagerungselement freiliegend ausgeführt. Das Linearverlagerungselement kann unmittelbar mit dem Kraftübertragungselement und dem Gegenlager zusammenwirken. Das Kraftübertragungselement, das mindestens eine Linearverlagerungselement und das mindestens eine Gegenlager sind in dem Gehäuse geschützt angeordnet.

Vorteilhaft ist es, wenn der Gehäusedeckel lösbar mit der Grundplatte verbindbar ist, beispielsweise durch Schrauben, Stecken und/oder Klipsen. Alternativ kann der Gehäusedeckel mit der Grundplatte auch unlösbar verbunden sein, beispielsweise durch Kleben oder Schweißen.

Zwei Linearverlagerungselemente gemäß Anspruch 9 ermöglichen eine vorteilhafte Umsetzung der Linearverlagerung. Denkbar ist auch eine winkelversetzte Anordnung der Linearverlagerungselemente an dem Kraftübertragungselement, um beispielsweise Bauraumvorgaben für das Gehäuse zu realisieren. Wesentlich ist, dass die Anordnung mehrerer Linearverlagerungselemente an dem Kraftübertragungselement die Effizienz der Antriebsvorrichtung steigern kann. Insbesondere können auch mehr als zwei Linearverlagerungselemente an dem Kraftübertragungselement angreifen.

Eine Antriebsvorrichtung gemäß Anspruch 10 ermöglicht eine vorteilhafte Umsetzung der Linearverlagerung. Ein Steigungskabel ermöglicht einerseits eine unmittelbare Kraftaufbringung durch eine Rollbewegung des Kraftübertragungselements. Das Steigungskabel ermöglicht auch eine flexible Richtungsvorgabe für die Verlagerungsrichtung. Insbesondere kann die Verlagerungsrichtung auch abschnittsweise gekrümmt ausgeführt sein. Dazu kann das Linearverlagerungselement innerhalb eines Führungskanals, insbesondere in Form eines gebogenen Rohres, geführt verlagerbar sein.

Eine Ausführung des Kraftübertragungselements und/oder des Gegenlagers jeweils mit einem Anschlagbund gewährleistet eine zuverlässige Axialführung des Linearverlagerungselements entlang seiner Längsachse.

Weitere vorteilhafte Ausgestaltungen, zusätzliche Merkmale und Einzelheiten der Erfindung ergeben sich aus der nachfolgenden Beschreibung eines Ausführungsbeispiels anhand der Zeichnung. Es zeigen:
- Fig. 1: eine perspektivische Darstellung einer erfindungsgemäßen Antriebsvorrichtung,
- Fig. 2: eine vergrößerte Seitenansicht eines Ausschnitts der Antriebsvorrichtung gemäß Fig. 1,
- Fig. 3: einen Längsschnitt gemäß Schnittlinie III-III in Fig. 2,
- Fig. 4: einen Querschnitt gemäß Schnittlinie IV-IV in Fig. 2.

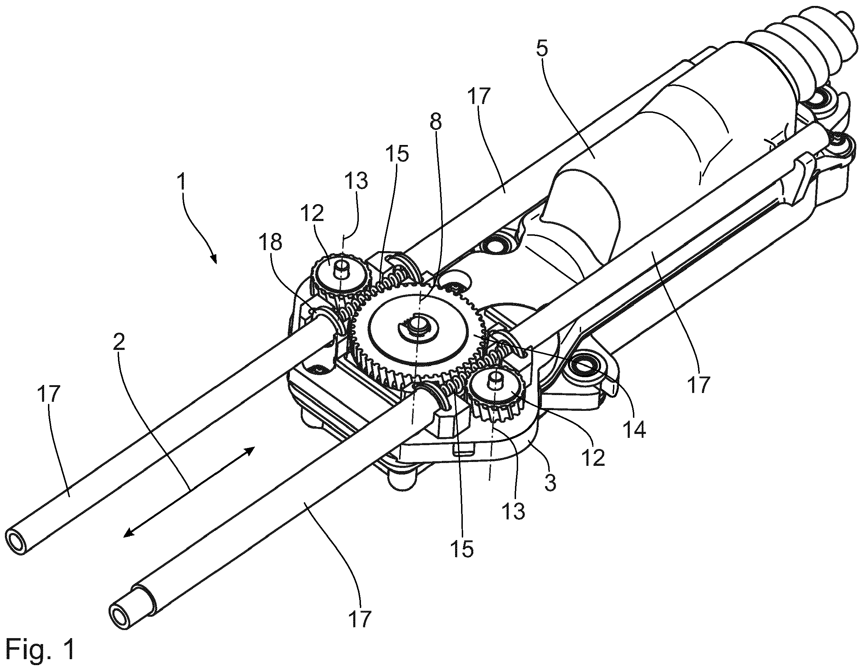

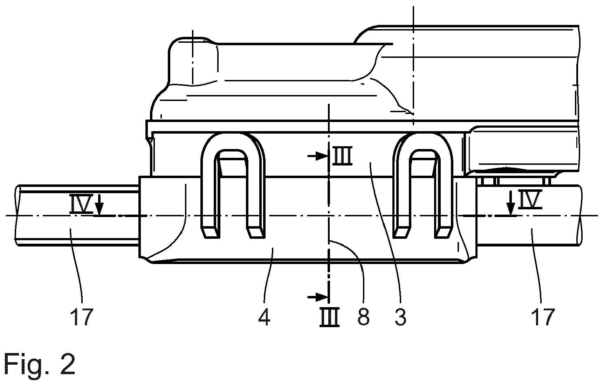

Eine in Fig. 1 bis 4 dargestellte Antriebsvorrichtung 1 ermöglicht eine Linearverlagerung von Sonnen- und Schiebedächern beispielsweise in einem Automobil. Die Linearverlagerung erfolgt entlang einer Verlagerungsrichtung 2.

Die Antriebsvorrichtung 1 umfasst eine Grundplatte 3, an der ein Gehäusedeckel 4 lösbar verbindbar angebracht werden kann. Die Grundplatte 3 und der Gehäusedeckel 4 bilden zusammen das Gehäuse der Antriebsvorrichtung 1.

Die Antriebsvorrichtung 1 weist ein Antriebselement 5 in Form eines Elektromotors auf. An das Antriebselement 5 ist eine nicht näher dargestellte Getriebeeinheit angeschlossen, um die von dem Antriebselement 5 zur Verfügung gestellte Antriebsbewegung auf eine Abtriebswelle 6 zu übertragen. Dazu ist die Abtriebswelle 6 drehfest mit einem GetriebeZahnrad 7 bezüglich einer Antriebsdrehachse 8 verbunden. Die Abtriebswelle 6 ist bezüglich der Antriebsdrehachse 8 drehbar an der Grundplatte 3 gelagert. Für die drehbar gelagerte Anordnung der Abtriebswelle 6 an der Grundplatte 3 ist in der Grundplatte 3 eine Steckaufnahme vorgesehen, in die die Abtriebswelle 6 drehbar bezüglich der Antriebsdrehachse 8 eingesteckt ist.

Die Abtriebswelle 6 weist einen Kraftübertragungsabschnitt 9 auf. Im Bereich des Kraftübertragungsabschnitts 9 weist die Abtriebswelle 6 eine bezüglich der Antriebsdrehachse 8 unrunde Außenkontur auf. Gemäß dem gezeigten Ausführungsbeispiel ist die Außenkontur des Kraftübertragungsabschnitts 9 als Außenverzahnung ausgeführt.

In der Grundplatte 3 sind weiterhin zwei Aufnahme 10 vorgesehen, in die jeweils ein Drehlagerzapfen 11 für ein Gegenlager 12 eingesteckt ist. Die Drehlagerzapfen 11 sind insbesondere identisch ausgeführt. Die Drehlagerzapfen 11 sind insbesondere als Zylinderstifte ausgeführt, die jeweils in die Aufnahme 10 der Grundplatte 3 eingesteckt sind. Die jeweilige Zylinderachse der Drehlagerzapfen 11 bildet jeweils eine Gegenlagerdrehachse 13, bezüglich der das Gegenlager 12 drehbar an der Grundplatte 3 gelagert ist. Der Drehlagerzapfen 11 ist insbesondere drehfest in der Grundplatte 3 befestigt. Das Gegenlager 12, das als außen verzahnte Gegenrolle ausgeführt ist, ist drehbar an dem Drehlagerzapfen 11 angeordnet. Der Drehlagerzapfen 11 ist gemäß dem gezeigten Ausführungsbeispiel als Zylinderstift ausgeführt. Der Zylinderstift ist kostengünstig verfügbar und kann als standardisiertes Bauteil in die Grundplatte 3 eingesteckt werden.

Alternativ ist es möglich, den Drehlagerzapfen 11 einteilig, insbesondere als Formelement, an der Grundplatte 3 anzuformen. Separate Zylinderstifte sind dann nicht erforderlich. Der Montageaufwand ist reduziert. Die Festigkeit des an der Grundplatte 3 angeformten Drehlagerzapfens 11 ist verbessert.

Die Antriebsdrehachse 8 und die Gegenlagerdrehachsen 13 sind parallel zueinander ausgerichtet. Das Gegenlager 12 ist schrägverzahnt ausgeführt. Die Antriebsdrehachse 8 und die Gegenlagerdrehachsen 13 sind gehäusefest, insbesondere grundplattenfest zueinander an der Antriebsvorrichtung 1 festgelegt.

Es ist auch denkbar, die Antriebsdrehachse 8 und die Gegenlagerdrehachse 13 zueinander geneigt anzuordnen. Besonders vorteilhaft ist eine geneigte Anordnung derart, dass zumindest eine der Verzahnungen, insbesondere das Gegenlager 12, geradverzahnt ausgeführt sein kann.

Eine virtuelle Verbindungslinie 16 der Antriebsdrehachse 8 mit einer der Gegenlagerdrehachsen 13 schneidet auch die jeweils andere Gegenlagerdrehachse 13. Das bedeutet, dass auf der virtuellen Verbindungslinie 16 zwischen den Gegenlagerdrehachsen 13 die Antriebsdrehachse 8 angeordnet ist. Die Verlagerungsrichtung 2, entlang der die Linearverlagerungselemente 15 mittels der Antriebsvorrichtung 1 verlagert werden, ist jeweils senkrecht zu der virtuellen Linie 16 orientiert.

Drehfest bezüglich der Antriebsdrehachse 8 ist an dem Kraftübertragungsabschnitt 9 der Abtriebswelle 6 ein Kraftübertragungselement 14 gekoppelt. Das Kraftübertragungselement 14 ist als außen verzahntes Stirnrad ausgeführt, das bezüglich der Antriebsdrehachse 8 drehfest mit der Abtriebswelle 6 und damit mit dem Antriebselement 5 gekoppelt ist.

Mit dem Kraftübertragungselement 14 wirken zwei Linearverlagerungselemente 15 zusammen, die jeweils als Steigungskabel ausgeführt sind. Ein Steigungskabel wird auch als Helixkabel bezeichnet. Die Steigungskabel 15 weisen jeweils einen helixförmigen Außensteg auf, der ein Gegeneingriffsmittel bildet, das mit der Außenverzahnung des Kraftübertragungselements 14 zusammenwirkt. Die Außenverzahnung des Kraftübertragungselements 14 bildet das Eingriffsmittel zum Zusammenwirken mit dem Gegeneingriffsmittel des Linearverlagerungselements 15. Der helixförmige Außensteg des Steigungskabels 15 weist eine Steigungshöhe, die der eines Bewegungsgewindes entspricht. Wesentlich ist, dass der Steigungswinkel des Steigungskabels 15 so groß ist, dass eine Selbsthemmung verhindert ist.

Die Linearverlagerungselemente 15 stehen mit dem Kraftübertragungselement 14 in Eingriff. Die Linearverlagerungselemente 15 sind jeweils an einer Außenseite, insbesondere dem Kraftübertragungselement 14 gegenüberliegend durch jeweils ein Gegenlager 12 abgestützt, also gelagert.

Der Gehäusedeckel 4 umschließt die Funktionskomponenten, insbesondere das Kraftübertragungselement 14, die beiden Linearverlagerungselemente 15 und die beiden Gegenlager 12. Innerhalb des Gehäuses, insbesondere in einem Kraftübertragungsbereich zwischen dem Kraftübertragungselement 14 und dem jeweiligen Gegenlager 12 ist das Linearverlagerungselement 15 freiliegend angeordnet. Außerhalb des Kraftübertragungsbereichs und insbesondere außerhalb des Gehäuses, ist das Linearverlagerungselement 15 innerhalb eines Führungskanals 17 verlagerbar angeordnet. Der Führungskanal 17 erstreckt sich entlang der Verlagerungsrichtung 2 beidseitig des Gehäuses. Die jeweils freien Enden der Führungskanäle 17 können einen Ringbund 18 aufweisen und in einer damit korrespondierenden Nut an dem Gehäuse, insbesondere der Grundplatte 3, axial festgelegt sein. Das Gehäuse umschließt die Linearverlagerungselemente in Verlagerungsrichtung 2 bereichsweise und in Umfangsrichtung um die Verlagerungsrichtung 2 vollständig. Die Linearverlagerungselemente 15 sind, insbesondere mittels der Führungskanäle 17, aus dem Gehäuse herausgeführt.

Der Gehäusedeckel 4 weist eine stirnseitige Deckelplatte und einen äußeren Ringbund auf, der stirnseitig an der Oberseite der Grundplatte 3 anliegen kann. Durch den äußeren Ringbund des Gehäusedeckels 4 ist das Gehäuse an der Grundplatte 3 geschlossen. In dem Gehäusedeckel 4, insbesondere an der Deckelplatte ist eine Sack-Gewindebohrung integriert, mit der der Gehäusedeckel 4 auf die Abtriebswelle 6 aufgesetzt und dadurch zentriert werden kann. Entlang der jeweiligen Gegenlagerdrehachse 13 ist den Aufnahmen 10 gegenüberliegend eine Deckelaufnahme 19 angeordnet. Die Drehlagerzapfen 11 sind jeweils in der Aufnahme 10 an der Grundplatte 3 und der Deckelaufnahme 19 am Gehäusedeckel 4 mechanisch robust und zuverlässig aufgenommen und dadurch gehalten.

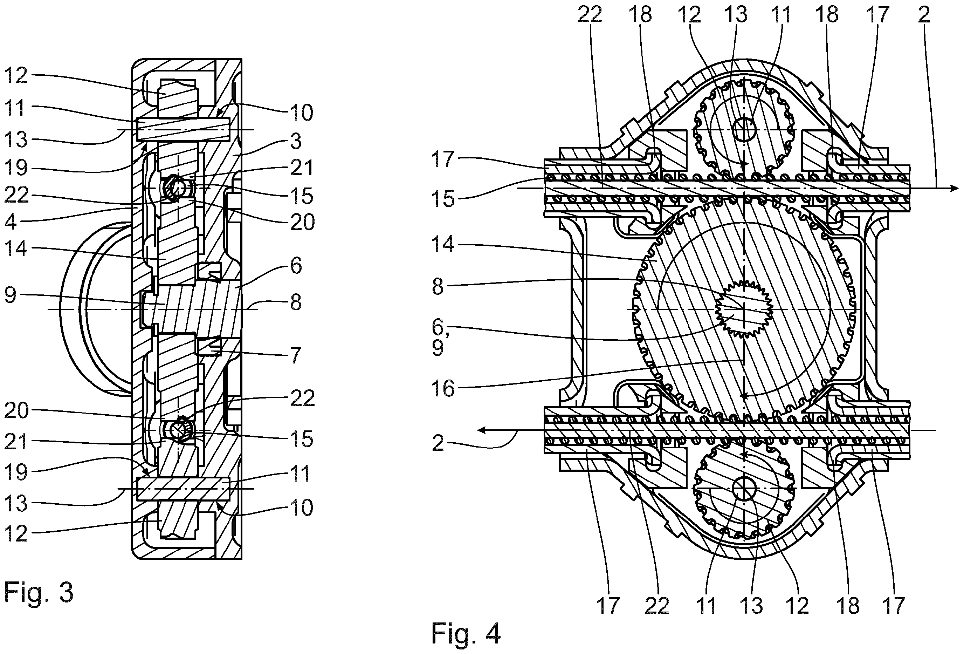

Nachfolgend wird die Funktion der Antriebsvorrichtung 1 näher erläutert. Zum Linearverlagern eines Sonnen- oder Schiebedachs wird die Antriebsvorrichtung 1 betätigt. Von dem Antriebselement 5 wird eine Antriebsbewegung über das Getriebe auf die Abtriebswelle 6 und von dort im Bereich des Kraftübertragungsabschnitts 9 auf das drehfest gekoppelte Kraftübertragungselement 14 übertragen. Die Außenverzahnung des Kraftübertragungselements 14 greift jeweils in die Steigungskabel 15 unmittelbar ein. Die Drehbewegung des Kraftübertragungselements 14 bewirkt eine Linearverlagerung der Steigungskabel 15 in jeweils entgegengesetzte Richtungen, wie dies in Fig. 4 dargestellt ist.

Dadurch, dass die Gegenlager 12 jeweils bezüglich der Gegenlagerdrehachse 13 drehbar gelagert und als außen verzahnte Gegenrolle ausgeführt sind, findet eine Abrollbewegung zwischen dem Gegenlager 12 und dem Linearverlagerungselement 15 statt. Insbesondere wird dadurch verhindert, dass das Kraftübertragungselement 14 und insbesondere der helixförmige Außensteg an einem Gleit-Gegenlager, insbesondere dem Gehäuse, entlang gleitet. Durch die außen verzahnten Gegenrollen ist der Wirkungsgrad der Antriebsvorrichtung 1 verbessert und der Verschleiß der Gegenrollen und insbesondere des Linearverlagerungselement 15 reduziert.

Das Kraftübertragungselement 14 und die Gegenlager 12 weisen jeweils im Bereich der Außenverzahnung des Linearverlagerungselements 15 einen Anschlagbund 20 bzw. 21 auf. Der Anschlagbund 20 des Kraftübertragungselements 14 und der jeweilige Anschlagbund 21 des Gegenlagers 12 liegen bezüglich der Längsachse 22 des Linearverlagerungselements 15 einander gegenüberliegend an dem Linearverlagerungselement 15 an. Der jeweilige Anschlagbund 20, 21 des Kraftübertragungselements 14 bzw. des Gegenlagers 12 dient als Axialabstützung für das Linearverlagerungselement 15 in einer Richtung senkrecht zur Antriebsdrehachse 8.

Der jeweilige Anschlagbund 20, 21 ist in der Richtung parallel zur Antriebsdrehachse 8 oberhalb und/oder unterhalb der Außenverzahnung des Linearverlagerungselements 15 angeordnet. Insbesondere liegt der jeweilige Anschlagbund 20, 21, insbesondere dauerhaft, an der Außenverzahnung des Linearverlagerungselements 15 an. Durch den jeweiligen Anschlagbund 20, 21 ist verhindert, dass das Linearverlagerungselement 15 unbeabsichtigt in der Richtung parallel zur Antriebsdrehachse 8 verlagert wird. Durch den jeweiligen Anschlagbund 20, 21 wird eine Linearführung des Linearverlagerungselements 15 entlang der Längsachse 22 gewährleistet. Die Längsachse 22 ist insbesondere senkrecht zu der virtuellen Verbindungslinie 16 und insbesondere senkrecht zu der Antriebsdrehachse 8 und der Gegenlagerdrehachse 13 orientiert. Insbesondere ist die Längsachse 22 senkrecht zu der Ebene, die von der Verbindungslinie 16 und der Antriebsdrehachse 8 aufgespannt wird, orientiert.

## Patentansprüche

1. Antriebsvorrichtung für eine Linearverlagerung entlang einer Verlagerungsrichtung umfassend
a. ein Antriebselement (5),
b. ein an das Antriebselement (5) gekoppeltes Kraftübertragungselement (14),
c. mindestens ein an dem Kraftübertragungselement (14) eingreifendes Linearverlagerungselement (15),
d. ein Gegenlager (12) zum Lagern des Linearverlagerungselement (15) an dem Kraftübertragungselement (14),
wobei das Gegenlager (12) bezüglich einer Gegenlagerdrehachse (13) drehbar gelagert ist.

2. Antriebsvorrichtung gemäß Anspruch 1, **dadurch gekennzeichnet, dass** das Kraftübertragungselement (14) bezüglich einer Antriebsdrehachse (8) drehfest mit dem Antriebselement (5) verbunden ist.

3. Antriebsvorrichtung gemäß Anspruch 2, **dadurch gekennzeichnet, dass** die Antriebsdrehachse (8) parallel zu der Gegenlagerdrehachse (13) orientiert ist.

4. Antriebsvorrichtung gemäß Anspruch 2 oder 3, **dadurch gekennzeichnet, dass** eine Verbindungslinie zwischen der Antriebsdrehachse (8) und der Gegenlagerdrehachse (13) senkrecht zu der Verlagerungsrichtung (2) orientiert ist.

5. Antriebsvorrichtung gemäß einem der vorstehenden Ansprüche, **dadurch gekennzeichnet, dass** das Kraftübertragungselement (14) mindestens ein Eingriffsmittel aufweist, das an mindestens einem Gegeneingriffsmittel des Linearverlagerungselements (15) eingreift.

6. Antriebsvorrichtung gemäß einem der vorstehenden Ansprüche, **dadurch gekennzeichnet, dass** das Gegenlager (12) als außenverzahnte Gegenrolle ausgeführt ist.

7. Antriebsvorrichtung gemäß einem der vorstehenden Ansprüche, **gekennzeichnet durch** eine Grundplatte (3), an der das Kraftübertragungselement (14) und das Gegenlager (12) befestigt sind.

8. Antriebsvorrichtung gemäß einem der vorstehenden Ansprüche, **gekennzeichnet durch** ein Gehäuse, das insbesondere einen Gehäusedeckel (4) aufweist, der lösbar mit der Grundplatte (3) verbindbar ist.

9. Antriebsvorrichtung gemäß einem der vorstehenden Ansprüche, **gekennzeichnet durch** zwei Linearverlagerungselemente (15), die insbesondere an dem Kraftübertragungselement (14) diametral gegenüberliegend angeordnet sind.

10. Antriebsvorrichtung gemäß einem der vorstehenden Ansprüche, **dadurch gekennzeichnet, dass** das Linearverlagerungselement (15) als Steigungskabel ausgeführt ist.

11. Antriebsvorrichtung gemäß einem der vorstehenden Ansprüche, **dadurch gekennzeichnet, dass** mindestens ein Anschlagbund (20, 21) an dem Linearverlagerungselement (15) zu dessen Axialführung anliegt, wobei der Anschlagbund (20, 21) insbesondere an dem Gegenlager (12) und/oder an dem Kraftübertragungselement (14) einteilig angeformt ist.
